**Europäisches Patentamt**

**European Patent Office**

**Office européen des brevets**

(19)

(11) Numéro de publication: **0 225 222**
**B1**

(12) # FASCICULE DE BREVET EUROPEEN

(45) Date de publication du fascicule du brevet:
02.05.90

(21) Numéro de dépôt: 86402360.1

(22) Date de dépôt: **22.10.86**

(51) Int. Cl.⁴: **H02G 3/12**

(54) **Appareillage électrique à assemblage perfectionné.**

(30) Priorité: **25.10.85 FR 8515845**

(43) Date de publication de la demande:
**10.06.87 Bulletin 87/24**

(45) Mention de la délivrance du brevet:
**02.05.90 Bulletin 90/18**

(84) Etats contractants désignés:
**BE DE ES IT**

(56) Documents cités:
**DE-A- 1 500 955**
**DE-A- 2 546 176**
**DE-A- 3 228 348**
**FR-A- 1 509 433**
**GB-A- 1 442 332**

(73) Titulaire: **LEGRAND, 128 Avenue du Maréchal de Lattre de Tassigny, F-87045 Limoges Cédex(FR)**

(72) Inventeur: **Laroudie, Christian, 1 Résidence des Vignes, F-87350 Panazol(FR)**
Inventeur: **Moreau, Bernard, 49 rue Auguste Renoir, F-87700 Aixe sur Vienne(FR)**
Inventeur: **Parlatore, Roger, 10 rue Corneille, 87110 Condat sur Vienne(FR)**

(74) Mandataire: **CABINET BONNET-THIRION, 95 Boulevard Beaumarchais, F-75003 Paris(FR)**

ACTORUM AG

## Description

L'invention concerne un appareillage électrique à assemblage perfectionné et plus particulièrement un tel appareillage formant le support d'un composant électrique quelconque, comme par example un interrupteur, une prise de courant, un fusible, un voyant, etc... en vue d'une fixation murale, de préférence encastrée, dudit composant.

L'invention se rapporte plus particulièrement à un perfectionnement garantissant un meilleur assemblage des éléments constitutifs de l'appareillage tout en facilitant son démontage et sa maintenance.

On connaît des appareillages électriques à fixation murale comportant plusieurs parties, les unes étant destinées à être encastrées et les autres venant se verrouiller sur les parties encastrées. Ainsi, le brevet français N° 1 509 433 décrit un dispositif dans lequel le verrouillage des différents éléments est assuré par des griffes basculantes commandées par vis.

Un appareillage électrique connu du type auquel peut avantageusement s'appliquer l'invention, comporte un socle formé du composant électrique et d'une embase de montage sur laquelle il est fixé (par exemple une plaque métallique comportant une large ouverture centrale pour dégager la face avant du composant), un mécanisme d'actionnement du composant ou un couvercle-enjoliveur (selon la nature dudit composant) venant masquer une partie centrale du socle et, de préférence, un cadre de finition venant masquer la périphérie du socle. Dans le cas d'un composant tel qu'un interrupteur, le mécanisme d'actionnement forme par exemple une ou plusieurs touches basculantes venant s'accoupler avec le composant pour permettre son actionnement. Tous ces éléments sont conformés pour coopérer entre eux de façon à assurer une fixation rapide et solide à une paroi, un chambranle ou tout autre support convenable. Ainsi, le socle destiné à être fixé par vis ou griffes à ladite paroi, comporte en outre, au moins un et généralement deux logements destinés à accueillir des colonnettes d'enfichage portées par le mécanisme d'actionnement ou l'enjoliveur précité, selon les cas. Ce dernier est généralement assemblé, par exemple par encliquetage, au cadre de finition défini plus haut, et la ou les colonnettes s'engagent à frottement dans le ou les logements du socle pour solidariser l'ensemble des éléments constitutifs de l'appareillage.

Il est assez difficile de maîtriser, en fabrication, le frottement qui détermine la fermeté de l'assemblage entre le socle et le reste de l'appareillage. Ce frottement doit être suffisant pour ne permettre qu'un démontage intentionnel, mais il ne doit pas être trop fort pour qu'un tel démontage, nécessité par exemple par une vérification, une opération d'entretien ou la réfection du local dans lequel il se trouve installé, ou simplement au moment de la pose si l'appareillage est livré assemblé, ne demande pas des efforts trop importants nécessitant par exemple le recours à un outil risquant de détériorer certains éléments de l'appareillage.

Les appareillages proposés actuellement sont le résultat d'un compromis qui n'est pas toujours satisfaisant. D'autre part, le frottement déterminant la fermeté de l'assemblage, risque de se modifier au cours du temps, en raison de l'usure, ou d'une modification d'élasticité de certains éléments.

L'invention propose un perfectionnement permettant de résoudre ces problèmes.

Dans cet esprit, l'invention concerne un appareillage électrique à montage perfectionné, notamment pour fixation murale, du type comportant un socle constitué d'un composant électrique et d'une embase de montage portant ce composant, au moins un logement ouvert étant défini dans ledit socle, un mécanisme d'actionnement ou un couvercle enjoliveur venant masquer au moins une partie centrale dudit socle, ce mécanisme d'actionnement ou ce couvercle enjoliveur comportant au moins une colonnette arrière de forme et dimensions propres à s'engager, de préférence à frottement doux, dans ledit logement ouvert, tandis qu'un cadre de finition vient, de préférence, masquer une partie périphérique dudit socle, caractérisé en ce que ladite colonnette comporte un moyen de verrouillage coopérant avec la paroi interne dudit logement pour assurer une fixation dudit mécanisme d'actionnement ou dudit couvercle-enjoliveur audit socle et en ce que ce moyen de verrouillage comporte une tige munie d'une came formant excentrique, ou d'un élément tronconique ou conique, logée dans un trou pratiqué axialement dans ladite colonnette et mobile dans celle-ci, ladite tige comportant une extrémité accessible pour la manœuvre de celle-ci.

Dans le cas d'un composant électrique à mécanisme mobile (interrupteur, commutateur de va-et-vient, permutateur, etc...) l'agencement décrit ci-dessus comporte généralement une pièce supplémentaire sous la forme d'une contreplaque munie d'une part, de moyens d'accrochage au cadre de finition précité, et d'autre part, de moyens d'articulation d'une ou plusieurs touches d'actionnement couplées au composant. Dans ce cas, ladite contreplaque porte également la où les colonnettes d'enfichage précitées.

Si le composant n'a au contraire aucune partie mobile (prise de courant, voyant) on utilise un couvercle-enjoliveur ne laissant apparaître que les parties utiles du composant, et ce couvercle-enjoliveur porte directement la ou les colonnettes d'enfichage, venues de moulage en face arrière de celui-ci.

L'invention sera mieux comprise et d'autres avantages de celle-ci apparaîtront plus clairement à la munière de la description qui va suivre de plusieurs modes de réalisation mettant en oeuvre son principe, donnée uniquement à titre d'exemple et faite en référence aux dessins annexés dans lesquels:

- la figure 1 est une vue de face d'un socle muni d'un interrupteur, conforme au principe de l'invention;
- la figure 2 est une vue en coupe de l'ensemble de l'appareillage utilisant le socle de la figure 1, cette coupe étant menée suivant la ligne II-II de la figure 1;
- la figure 3 est une vue en élévation de la contreplaque de la figure 2;

- la figure 4 est une vue de face montrant la contreplaque et le cadre assemblés;
- la figure 5 est une vue de détail en coupe partielle d'une colonnette dans son logement, cette coupe étant menée suivant la ligne V-V de la figure 4;
- les figures 6 à 11 sont des vues analogues à la figure 5 illustrant des variantes.

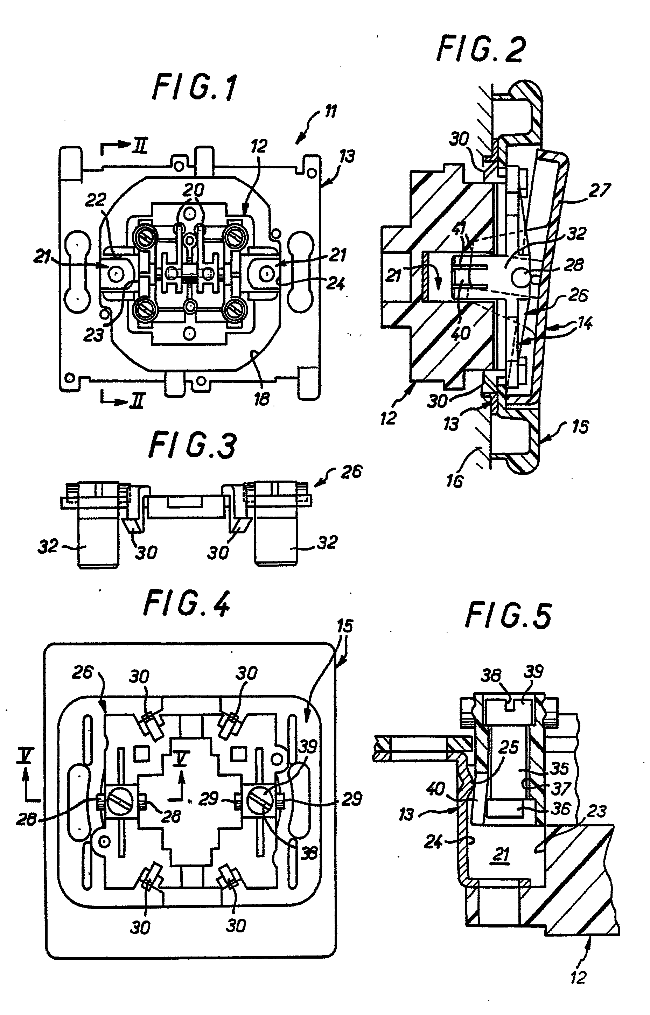

En se référant plus particulièrement aux figures 1 à 5, l'appareillage électrique représenté se compose d'un socle 11 comprenant un composant électrique 12 sous la forme d'un interrupteur double et une embase de montage 13 à laquelle est fixé ledit composant, d'un mécanisme d'actionnement 14 venant masquer une partie centrale du socle 11 (figure 2) et d'un cadre de finition 15 venant en position d'assemblage, masquer une partie périphérique du socle 11. L'ensemble de l'appareillage est fixé à une paroi 16 par l'intermédiaire de l'embase de montage 13, ici au moyen de vis non représentées. Cette embase 13 est munie d'une large ouverture centrale 18 laissant apparaître la face avant de l'interrupteur 12 et notamment deux leviers d'actionnement 20. Deux logements ouverts 21 sont définis dans le socle, par des parois latérales 22, 23 définies dans le corps de l'interrupteur 12 d'une part, et par des pattes repliées 24 de l'embase de montage métallique 13 d'autre part. Un bossage 25, obtenu simplement par déformation locale de la patte métallique 24, fait intérieurement saillie de la paroi latérale de chaque logement 21.

Le mécanisme d'actionnement 14 précité se compose d'une contreplaque 26 et de deux touches d'actionnement 27 respectivement accouplées aux leviers 20 de l'interrupteur double. Pour ce faire, la contreplaque 26 comporte des pivots d'articulation 28, 29 sur lesquels sont respectivement montées les touches 27. La contreplaque 26 comporte également des moyens d'encliquetage 30 par lesquels elle est susceptible d'être assemblée au bord interne du cadre 15; de cette façon, l'ensemble du mécanisme d'actionnement 14 et du cadre 15 peut être assemblé au socle 11 déjà fixé à la paroi. Pour ce faire, la contreplaque 26 comporte deux colonnettes arrière 32, à section carrée ou rectangulaire, de forme, dimensions et écartement propres à permettre leur engagement, de préférence à frottement doux, dans les logements ouverts 21.

Selon l'invention, chaque colonnette comporte un moyen de verrouillage coopérant avec la paroi interne du logement 21 correspondant, pour assurer une fixation du mécanisme d'actionnement (portant en outre le cadre 15 grâce à la contreplaque 30) audit socle 11.

En considérant plus particulièrement la figure 5, on voit que ce moyen de verrouillage comporte une tige 35 munie d'une came 36 formant excentrique et logée dans un trou traversant 37 pratiqué axialement dans la colonnette 32. La tige 35 est mobile en rotation d'un quart de tour dans le trou 37; elle peut être actionnée par un simple tournevis grâce à une fente de manoeuvre 38 pratiquée à une extrémité accessible 39 de ladite tige 35. Les extrémités 39 sont accessibles pour le verrouillage ou le déverrouillage, en façade de l'appareillage, lorsque les touches 27 ne sont pas en place (voir figure 4).

La came 36 coopère avec une paroi interne du logement 21 par l'intermédiaire d'une partie déformable 40 de la colonnette 32. Plus précisément, la colonnette comporte une découpe latérale, ici sous la forme de deux fentes longitudinales 41 donnant à la partie déformable la forme d'une languette flexible et la came 36 repousse cette languette vers la patte repliée 24 pour assurer le verrouillage de la colonnette 32 dans le logement correspondant du socle.

Dans l'exemple présentement décrit, la came 36 et le bossage 25 sont à des niveaux différents lorsque la colonnette est complètement engagée dans son logement. Ainsi, la partie déformable 40 est appliquée et pliée contre le bossage sous l'action de serrage de la came 36.

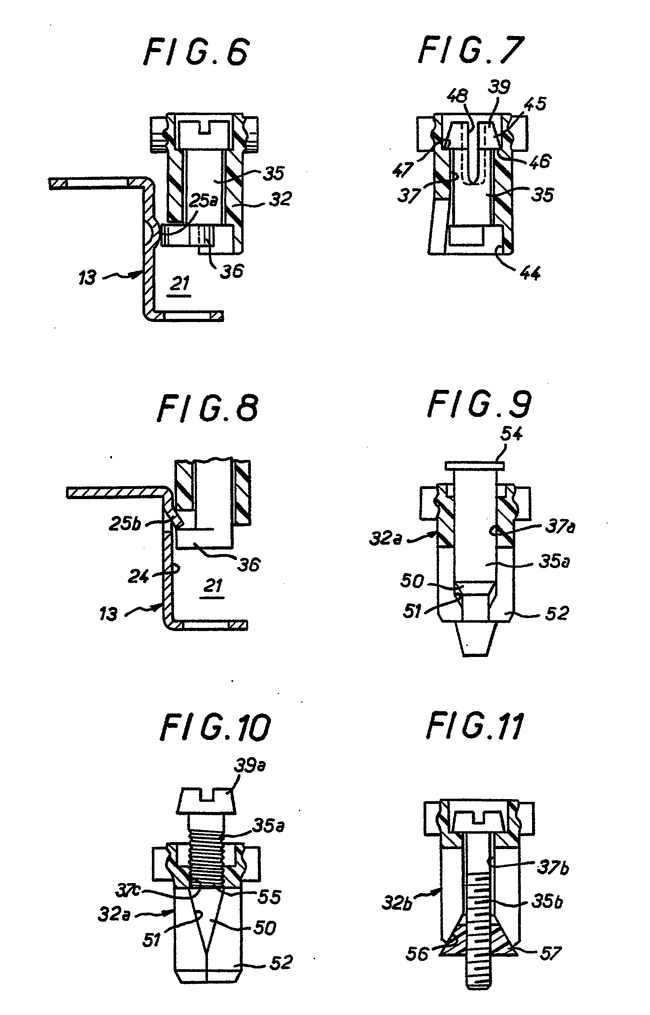

Les moyens de verrouillage qui viennent d'être déscrits peuvent subir de nombreuses modifications sans sortir du cadre de l'invention, comme le montrent les variantes des figures 6 à 11.

En considérant la figure 6, on voit que la came 36 exerce directement son action de serrage contre la patte repliée 24 du logement 21. Pour cela, l'agencement est de préférence modifié de façon que le bossage 25a soit sensiblement au même niveau que la came 36 lorsque la colonnette 32 est engagée dans le logement 21.

La variante de la figure 7 est plus particulièrement étudiée pour permettre un montage à force de la tige 35 par l'extrémité 44 du trou traversant 37 opposée à celle par laquelle l'extrémité accessible 39 de la tige 35 peut être manoeuvrée. Pour cela, ladite tige comporte une portion tronconique 45 près de l'extrémité accessible 39 et se raccordant au corps cylindrique de la tige 35 par un épaulement 46 reposant sur un épaulement 47 correspondant du trou 37. Par ailleurs la tige 35 est fendue en 48 sur une assez grande longeur à partir de ladite extrémité accessible 39 pour lui conférer une certaine élasticité radiale permettant son montage par l'extrémité 44.

En considérant la figure 8, on voit que le logement 21 peut comporter une rampe ou analogue 25b faisant saillie intérieurement de la patte repliée 24 dudit logement 21 et que la came 36 est montée dans ce logement de façon à prendre appui contre la paroi latérale de celui-ci à l'arrière de ladite rampe 25b.

Selon les modes de réalisation des figures 9 et 10, le moyen de verrouillage comporte une tige 35a logée dans un trou 37a pratique axialement dans la colonnette 32a et muni d'une portion conique ou tronconique 50 située en regard d'une surface complémentaire 51 (c'est-à-dire également conique ou tronconique) du trou 37a, la paroi de la colonnette étant de préférence fendue longitudinalement au moins au voisinage de cette surface complémentaire. Ces fentes définissent donc des doigts 52 mobiles radialement sous l'action d'enfoncement de la tige 35a.

Dans l'exemple de la figure 9, la tige 35a est simplement mobile axialement en translation et comporte une tête de manoeuvre 54 à son extrémité accessible, cette tête pouvant être repoussée pour le serrage et dégagée au moyen par exemple d'un tournevis faisant levier pour le déblocage.

Dans l'exemple de la figure 10, la tige 35a comporte une portion filetée 55 coopérant avec la partie du trou 37c située dans la zone non fendue de la colonnette 32a, l'extrémité accessible 39a de cette tige étant conformée en tête de vis.

L'agencement de la figure 11 montre un moyen de verrouillage constitué par une vis 35b logée dans un trou traversant 37b pratiqué axialement dans la colonnette 32b dont une extrémité est munie intérieurement d'une portion de surface tronconique 56 tandis qu'un écrou tronconique 57 disposé en regard de la surface tronconique 56 est engagé sur la vis 35b. Là encore, la colonnette 32b est avantageusement munie de fentes longitudinales.

Ainsi, avec l'agencement qui vient d'être décrit, principalement en référence aux figures 1 à 5, le montage de l'appareillage selon l'invention se fait essentiellement en deux temps. On fixe d'abord le socle 11 à la paroi, le composant 12 venant prendre place dans un évidement de ladite paroi. Puis, la contreplaque 26 portant déjà le cadre 15 est mise en place, les colonnettes 32 s'enfichant à frottement doux dans les logements 21 du socle fixé à la paroi. Il ne reste plus alors qu'à verrouiller la contreplaque 26 en tournant les tiges 35 d'un quart de tour dans leurs colonnettes respectives avant de mettre en place, par simple emboîtement, les deux touches 27 venant recouvrir l'ouverture intérieure du cadre 15 et masquer par conséquent les moyens de verrouillage.

Comme mentionné précédemment, dans le cas d'un composant statique (prise de courant, fusible, voyant lumineux) la contreplaque 26 et les touches 27 sont remplacées par un simple couvercle-enjoliveur comportant les colonnettes 32 conformes à l'invention.

## Revendications

1. Appareillage électrique à montage perfectionné, notamment pour fixation murale, du type comportant un socle (11) constitué d'un composant électrique (12) et d'une embase de montage (13) portant ce composant, au moins un logement ouvert (21) étant défini dans ledit socle, un mécanisme d'actionnement ou un couvercle enjoliveur (14) venant masquer au moins une partie centrale dudit socle, ce mécanisme d'actionnement ou ce couvercle enjoliveur comportant au moins une colonnette (32) arrière de forme et dimensions propres à permettre son engagement, de préférence à frottement doux, dans ledit logement ouvert, tandis qu'un cadre de finition (15) vient, de préférence, masquer une partie périphérique dudit socle, caractérisé en ce que ladite colonnette comporte un moyen de verrouillage (36, 40) coopérant avec la paroi interne dudit logement (21) pour assurer une fixation dudit mécanisme d'actionnement ou couvercle-enjoliveur audit socle et en ce que ce moyen de verrouillage comporte une tige (35) munie d'une came (36) formant excentrique ou d'un élément tronconique ou conique, logée dans un trou (37) pratiqué axialement dans ladite colonnette et mobile dans celle-ci, ladite tige comportant une extrémité accessible (39 ) pour la manœuvre de celle-ci.

2. Appareillage selon la revendication 1, caractérisé en ce que ladite tige (35) comporte une fente de manœuvre (38) ou un moyen analogue à ladite extrémité accessible.

3. Appareillage selon la revendication 2, caractérisé en ce que ladite came (36) coopère avec la paroi interne dudit logement par l'intermédiaire d'une partie déformable (40) de ladite colonnette.

4. Appareillage selon la revendication 3, caractérisé en ce que ladite colonnette comporte au moins une découpe latérale (41) définissant une languette flexible (40), ladite came coopérant avec cette languette pour assurer le verrouillage dudit mécanisme d'actionnement ou couvercle-enjoliveur audit socle.

5. Appareillage selon la revendication 1, caractérisé en ce que ledit logement (21) comporte un bossage (25) faisant intérieurement saillie de sa paroi latérale.

6. Appareillage selon la revendication 2 et la revendication 5, caractérisé en ce que ledit bossage (25a) et ladite came (36) sont sensiblement au même niveau lorsque ladite colonnette (32) est engagée dans ledit logement.

7. Appareillage selon la revendication 3 ou 4, et la revendication 5, caractérisé en ce que ladite came (36) et ledit bossage (25) sont à des niveaux différents lorsque ladite colonnette est engagée dans ledit logement, de façon que la partie déformable précitée soit appliquée contre ledit bossage sous l'action de serrage de ladite came.

8. Appareillage selon l'une des revendications 2 à 7, caractérisé en ce que ladite tige comporte une portion tronconique (45) près de ladite extrémité accessible (39), se raccordant au corps cylindrique de la tige (35) par un épaulement (46) reposant sur un épaulement (47) correspondant dudit trou (37) et en ce que ladite tige est fendue sur une certaine longueur à partir de ladite extrémité accessible pour lui conférer une certaine élasticité radiale permettant un montage à force de ladite tige par l'extrémité (44) dudit trou (37) opposée à celle par laquelle l'extrémité accessible (39) de ladite tige peut être manœuvrée.

9. Appareillage selon l'une des revendications 2 à 4, caractérisé en ce que ledit logement (21) comporte une rampe (25b) ou analogue faisant saillie intérieurement de sa paroi latérale et en ce que ladite came (36) est montée dans ledit logement de façon à prendre appui contre la paroi latérale de celui-ci à l'arrière de ladite rampe.

10. Appareillage selon la revendication 1, caractérisé en ce que ledit moyen de verrouillage comporte une tige (35a) pratiqué axialement dans ladite colonnette (32a) et muni d'une portion tronconique ou conique (50) située en regard d'une surface complémentaire (51) ménagée à la face interne dudit trou, la paroi de ladite colonnette étant, de préférence, fendue au moins au voisinage de ladite surface complémentaire.

11. Appareillage selon la revendication 10, caractérisé en ce que ladite tige (35a) est mobile axialement en translation et comporte une tête de manœuvre (54) à une extrémité accessible de celle-ci (figure 9).

12. Appareillage selon la revendication 10, caractérisé en ce que ladite tige (35a) comporte une portion filetée (55) coopérant avec une partie du trou (37c) située dans une zone non fendue de ladite colonnette (figure 10).

13. Appareillage selon la revendication 1, caractérisé en ce que ledit moyen de verrouillage comporte une vis (35b) logée dans un trou traversant (37b) pratiqué axialement dans ladite colonnette, dont une extrémité est munie intérieurement d'une portion de surface tronconique (56) et en ce qu'un écrou tronconique (57) de forme complémentaire, disposé en regard de ladite surface tronconique (56) est engagé sur ladite vis (35b).

14. Appareillage selon l'une des revendications précédentes, caractérisé en ce que la ou les colonnettes (32) sont venues de moulage avec une contreplaque (26) munie de moyens d'accrochage (30) à un cadre de finition (15) précité, cette contreplaque comportant, en outre, des moyens d'articulation (28, 29) d'au moins une touche d'actionnement (27).

## Claims

1. An electrical fitting affording improved assembly, in particular for wall fixing, of the type comprising a base (11) formed by an electrical component (12) and a mounting base member (13) carrying said component, at least one open housing (21) being defined in said base, an actuating mechanism or an embellishing cover (14) masking at least a central part of said base, said actuating mechanism or said embellishing cover comprising at least one rear post (32) of a shape and dimensions such as to permit engagement thereof into said open housing, preferably with a slight degree of friction, while a finishing frame (15) preferably masks a peripheral part of said base, characterised in that said post comprises a locking means (36, 40) co-operating with the internal wall of said housing (21) to provide for fixing of said actuating mechanism or embellishing cover to said base and that said locking means comprises a stem (35) which is provided with a cam (36) forming an eccentric or a frustoconical or conical element and which is accommodated in a hole (37) provided axially in said post and which is movable in same, said stem comprising an accessible end (39) for operating same.

2. A fitting according to claim 1 characterised in that said stem (35) comprises an operating slot (38) or a similar means at said accessible end.

3. A fitting according to claim 2 characterised in that said cam co-operates with the internal wall of said housing by way of a deformable part (40) of said post.

4. A fitting according to claim 3 characterised in that said post comprises at least one lateral cut-out (41) defining a flexible tongue portion (40), said cam co-operating with said tongue portion to provide for locking of said actuating mechanism or embellishing cover to said base.

5. A fitting according to claim 1 characterised in that said housing (21) comprises a boss (25) projecting inwardly from its side wall.

6. A fitting according to claim 2 and claim 5 characterised in that said boss (25a) and said cam (36) are substantially at the same level when said post (32) is engaged into said housing.

7. A fitting according to claim 3 or claim 4 and claim 5 characterised in that said cam (36) and said boss (25) are at different levels when said post is engaged into said housing in such a way that said deformable part is applied against said boss under the clamping action of said cam.

8. A fitting according to one of claims 2 to 7 characterised in that stem comprises a frustoconical portion (45) close to said accessible end (39), being connected to the cylindrical body of the stem (35) by a shoulder (46) resting on a corresponding shoulder (47) of said hole (37) and that said stem is split over a certain length from said accessible end to impart thereto a certain degree of radial elasticity permitting force fitting of said stem by way of the end (44) of said hole (37) which is opposite to that by way of which the accessible end (39) of said stem can be operated.

9. A fitting according to one of claims 2 to 4 characterised in that said housing (21) comprises a ramp (25b) or the like projecting inwardly from its side wall and that said cam (36) is mounted in said housing in such a way as to bear against the side wall thereof rearwardly of said ramp.

10. A fitting according to claim 1 characterised in that said locking means comprises a stem (35a) housed in a hole (37a) which is provided axially in said post (32a) and provided with a frustoconical or conical portion (50) disposed facing a complementary surface (51) provided at the internal face of said hole, the wall of said post preferably being split at least in the vicinity of said complementary surface.

11. A fitting according to claim 10 characterised in that said stem (35a) is axially movable with a translatory motion and comprises an operating head (54) at an accessible end thereof (Figure 9).

12. A fitting according to claim 10 characterised in that said stem (35a) comprises a screwthreaded portion (55) co-operating with a part of the hole (37c) which is disposed in an unsplit zone of said post (Figure 10).

13. A fitting according to claim 1 characterised in that said locking means comprises a screw (35b) accommodated in a through hole (37b) provided axially in said post, one end thereof being internally provided with a frustoconical surface portion (56), and that a frustoconical nut (57) of complementary shape which is disposed facing said frustoconical surface (56) is engaged on said screw (35b).

14. A fitting according to one of the preceding claims characterised in that the post or posts (32) are moulded with a backing plate (26) provided with means (30) for latching to a said finishing frame (15), said backing plate further comprising means (28, 29) for pivotally mounting at least one actuating key member (27).

## Patentansprüche

1. Elektrisches Gerät mit verbessertem Aufbau, insbesondere zur Befestigung in der Wand, des Typs, der einen durch ein elektrisches Bauteil (12) gebildeten Sockel (11) und eine das Bauteil tragende Montageplatte (13) aufweist, wobei mindestens eine offene Aufnahme (21) in dem Sockel bestimmt ist, ein Betätigungsmechanismus oder ein Zierdeckel (14) mindestens einen zentralen Teil des Sockels abdeckt, der Betätigungsmechanismus oder der Zierdeckel mindestens einen hinteren Zapfen (32) aufweist, dessen Form und Abmessungen geeignet sind, seinen vorzugsweise mit sanfter Reibung bewirkten Eingriff in die offene Aufnahme zu erlauben, während ein Abschlußrahmen (15) vorzugsweise ein Umfangsteil des Sockels abdeckt, dadurch gekennzeichnet, daß der Zapfen ein mit der Innenwand der Aufnahme (21) zusammenwirkendes Rastmittel (36, 40) aufweist, um eine Befestigung des Betätigungsmechanismus oder des Zierdeckels an dem Sockel sicherzustellen, und daß das Rastmittel einen Schaft (35) aufweist, der mit einem einen Exzenter bildenden Nocken (36) oder einem kegelstumpfförmigen oder kegligen Element versehen ist, das in einer praktisch axial in dem Zapfen verlaufenden Öffnung (37) untergebracht und darin bewegbar ist, und daß der Schaft einen zu seiner Betätigung zugänglichen Endabschnitt (39) aufweist.

2. Gerät nach Anspruch 1, dadurch gekennzeichnet, daß der Schaft (35) einen Betätigungsschlitz (38) oder ein gleichwertiges Mittel an seinem zugänglichen Endabschnitt trägt.

3. Gerät nach Anspruch 2, dadurch gekennzeichnet, daß der Nocken (36) mit der Innenwand der Aufnahme über einen verformbaren Abschnitt (40) des Zapfens zusammenwirkt.

4. Gerät nach Anspruch 3, dadurch gekennzeichnet, daß der Zapfen mindestens einen seitlichen Einschnitt (41) besitzt, der eine flexible Zunge (40) bestimmt, so daß der Nocken mit der Zunge zusammenwirkt, um die Verrastung des Betätigungsmechanismus oder des Zierdeckels an dem Sockel sicherzustellen.

5. Gerät nach Anspruch 1, dadurch gekennzeichnet, daß die Aufnahme (21) einen Höcker (25) aufweist, der einen Innenvorsprung ihrer Seitenwand bildet.

6. Gerät nach Anspruch 2 und Anspruch 5, dadurch gekennzeichnet, daß der Höcker (25a) und der Nocken (36) im wesentlichen auf gleichem Niveau sind, wenn der Zapfen (32) mit der Aufnahme in Eingriff ist.

7. Gerät nach Anspruch 3 oder 4 und Anspruch 5, dadurch gekennzeichnet, daß der Nocken (36) und der Höcker (25) auf unterschiedlichem Niveau sind, wenn der Zapfen in der Aufnahme in Eingriff ist, derart, daß der genannte verformbare Abschnitt sich unter der Verrastungswirkung des Nockens gegen den Höcker anlegt.

8. Gerät nach einem der Ansprüche 2 bis 7, dadurch gekennzeichnet, daß der Schaft einen kegelstumpfförmigen Abschnitt (45) bei dem zugänglichen Ende (39) aufweist, der mit dem zylindrischen Körper des Schaftes (35) über eine Schulter (46) verbunden ist, welche auf einer entsprechenden Schulter (47) der Öffnung (37) aufsitzt, und daß der Schaft über ein gewisses Stück seiner Länge von dem zugänglichen Ende an geschlitzt ist, um ihm eine gewisse Radialelastizität mitzuteilen, die einen Zwangseinbau des Schaftes durch das Ende (44) der Öffnung (37) zuläßt, welches dem Ende gegenüberliegt, durch das das zugängliche Ende (36) des Schaftes betätigt werden kann.

9. Gerät nach einem der Ansprüche 2 bis 4, dadurch gekennzeichnet, daß die Aufnahme (21) eine Schrägwand (25b) oder eine gleichwertige Ausbildung aufweist, die eine innere Auskragung der Seitenwand bildet, und daß der genannte Nocken (36) in der Aufnahme in einer Art angebracht ist, daß er sich gegen die Seitenwand hinter der Schrägfläche andrücken kann.

10. Gerät nach Anspruch 1, dadurch gekennzeichnet, daß das Rastmittel einen in einer Öffnung (37a) untergebrachten Schaft (35a) aufweist, wobei die Öffnung praktisch axial in dem Zapfen (32a) verläuft, und mit einem kegelstumpf- oder kegelförmigen Abschnitt (50) versehen ist, der bezüglich einer an der Innenwand der Öffnung ausgesparten komplementären Fläche (51) liegt, wobei die Wand des Zapfens vorzugsweise mindestens in der Nähe der Komplementärfläche geschlitzt ist.

11. Gerät nach Anspruch 10, dadurch gekennzeichnet, daß der Schaft (35a) auf Schub axialbeweglich ist und an seinem zugänglichen Ende einen Betätigungskopf (54) trägt (Fig. 9).

12. Gerät nach Anspruch 10, dadurch gekennzeichnet, daß der Schaft (35a) einen Gewindeabschnitt (55) aufweist, der mit einem Abschnitt der Öffnung (37c) zusammenwirkt, welcher in einer nicht geschlitzten Zone des Zapfens liegt (Fig. 10).

13. Gerät nach Anspruch 1, dadurch gekennzeichnet, daß das Rastmittel eine Schraube (35b) aufweist, die in einer den Zapfen praktisch axial durchdringenden Öffnung (37b) sitzt, deren eines Ende im Inneren mit einem kegelstumpfförmigen Flächenabschnitt (56) versehen ist, und daß eine entsprechend ausgebildete kegelstumpfförmige Mutter (57) bezüglich der kegelstumpfförmigen Fläche (56) ausgerichtet und mit der Schraube (35b) in Eingriff ist.

14. Gerät nach einem der vorangehenden Ansprüche, dadurch gekennzeichnet, daß der oder die Zapfen (32) in eine Abschlußplatte (26) eingedrückt ist bzw. sind, die mit Verhakungsmitteln (30) für den genannten Abschlußrahmen (15) versehen ist, wobei die Abschlußplatte unter anderem Lagermittel (28, 29) für die mindestens eine Betätigungstaste (27) aufweist.

FIG.1

FIG.2

FIG.3

FIG.4

FIG.5

EP 0 225 222 B1

## FIG.6

## FIG.7

## FIG.8

## FIG.9

## FIG.10

## FIG.11